# EUROPEAN PATENT SPECIFICATION

(11) **EP 2 808 478 B1**
(45) Date of publication and mention of the grant of the patent: **30.08.2017**
(21) Application number: 14170612.7
(22) Date of filing: 30.05.2014
(51) Int. Cl.: E06B 3/84, E06B 5/16, C09J 103/02, E06B 3/70

(54) **Degradable environmentally friendly fireproof wooden door plank and environmentally friendly fireproof wooden door**
Abbaubare umweltfreundliche feuerfeste Holztürverschalung und umweltfreundliche feuerfeste Holztür
Planche de porte en bois ignifuge écologique dégradable et porte en bois ignifuge écologique

(30) Priority: 31.05.2013 CN 201310214783
(43) Date of publication of application: 03.12.2014
(73) Proprietor: Lee Cheong Construction & Building Materials Limited, Sheung Wan, Hong Kong (CN)
(72) Inventor: Kong, Ming, Hong Kong (HK)
(74) Representative: Johansson, Lars E.

(56) References cited:
- EP-A1- 0 524 920
- EP-A1- 1 481 778
- EP-A2- 1 596 361
- BE-A- 555 474
- JP-A- 2004 332 401
- US-A- 2 575 895

## Description

### FIELD OF THE INVENTION

The present invention relates to a fireproof wooden door, and more particularly to a degradable environmentally friendly fireproof wooden door plank and an environmentally friendly fireproof wooden door.

### BACKGROUND OF THE INVENTION

A Chinese patent application CN1143559A disclosed a high-strength fire-retarding plywood door with relief. The manufacture of this kind of doors comprises the following steps: (1) crushing wood scrap disposal and sawdust by virtue of a crusher and drying the crushed powder; (2) putting plant fiber, urea-formaldehyde glue and flame retardants into a mixer according to the ratio of 100:20:5 and mixing the same therein to form paper pulp; (3) placing the processed paper pulp onto a first mold, and placing the uniformly mixed plant fiber onto the paper pulp; (4) feeding the first mold into a hot press and pressing the product for 10 minutes at a temperature of about 120°C to form a door panel with three-dimensional pattern; (5) placing the door panel with three-dimensional pattern into a second mold, mounting a door frame around the door panel, filling stuffing such as corncobs or other plane fibers into the door frame uniformly, and covering another door panel on the top of the stuffing; (6) feeding the second mold into a hot press and pressing the material in the second mold for 10 minutes at a temperature of about 100 °C to form a door. The products in the prior arts are fireproof and moistureproof. However, urea-formaldehyde glue is applied in the above-mentioned fireproof doors, which is not degradable. In this connection, such kind of wooden doors could not degrade under natural physical and chemical conditions after being discarded, and thus are not environmentally friendly. Furthermore, to meet the requirement for 1-hour fire resistance period, the thickness of this kind of conventional fireproof wooden door is normally very big, for example above 48mm, and thus a plenty of material is needed for the door.

JP 2004332401 discloses a door plank corresponding to the preamble of claim 1 of the present application. This door plank is not constructed with concern about achieving an environment friendly and degradable product.

### SUMMARY OF THE INVENTION

To overcome the above-mentioned defects, the main object of the present invention is to provide a degradable environmentally friendly fireproof wooden door plank which could resist fire effectively and could decrease the requested thickness of a wooden door. Furthermore, the door made of this kind of plank could degrade automatically under natural physical and chemical conditions in the air, and thus the environmentally friendly effect could be realized.

Another object of the present invention is to provide an environmentally friendly fireproof wooden door made of the above-mentioned degradable environmentally friendly fireproof wooden door plank.

A further object of the present invention is to provide a method for manufacturing a degradable environmentally friendly fireproof wooden door plank.

The present invention provides a degradable environmentally friendly fireproof wooden door plank with the features of claim 1. In the above-mentioned degradable environmentally friendly fireproof wooden door plank, the natural fiber material includes discarded construction material, discarded wood, bamboo or cartons.

In the above-mentioned degradable environmentally friendly fireproof wooden door plank, the adhesive in the mineral sandwich layer is a mixture of polyvinyl acetate, polyvinyl alcohol and soybean extract, and the mineral sandwich layer is expandable upon being heated to a temperature of 280 °C or above.

In the above-mentioned degradable environmentally friendly fireproof wooden door plank, the degradable environmentally friendly fireproof wooden door plank has a thickness of 29mm, to meet the requirement for 1-hour or 2-hour fire resistance period.

In the above-mentioned degradable environmentally friendly fireproof wooden door plank, the degradable environmentally friendly fireproof wooden door plank has a thickness of 60mm, to meet the requirement for 4-hour fire resistance period.

The above-mentioned degradable environmentally friendly fireproof wooden door plank may further comprise a fireproof decorative panel with a thickness of 2mm attached to an outer surface of each degradable wooden layer.

According to the present invention, an environmentally friendly fireproof wooden door is provided, which may comprise: a wooden door frame; and the above-mentioned degradable environmentally friendly fireproof wooden door plank fixedly connected to the wooden door frame.

According to the present invention, a method for manufacturing a degradable environmentally friendly fireproof wooden door plank is provided, which may comprises the following steps:
(1) preparing natural fiber material by collecting and selecting discarded construction material, discarded wood, bamboo, cartons or other natural fiber material and removing metal, paint and litter therein, conducting a first grinding on the natural fiber material to form blocks in the size of 25-30mm, conducting a second grinding on the blocks to form particles in the size of 5mm or below and blowing away litters in particles, and conducting a third grinding on the particles to form powder;
(2) mixing adhesive consisted of natural starch and organic animal glue into the powder according to the mixture ratio of 2:1 to 3:1, stirring the mixture to become a paste status, pouring the pasty mixture into a mold designed according to the size and thickness of a desired fireproof wooden door plank, and heating and solidifying the pasty mixture within the mold by virtue of microwave to form a degradable wooden layer with a desired thickness;
(3) placing a mineral sandwich layer with a thickness of 3mm on the degradable wooden layer, in which the mineral sandwich layer is consisted of perlite and adhesive and is expandable upon heated to a temperature of 280 °C or above; and
(4) forming another degradable wooden layer above the mineral sandwich layer by conducting the above steps (1) and (2), to form a finished product of the degradable fireproof wooden door plank with a desired thickness.

According to the present invention, a degradable environmentally friendly wooden door is consisted of two degradable fireproof wooden layers and a sandwich insulation layer therebetween, in which the degradable fireproof wooden layer could be manufactured by mixing natural fiber material with natural starch adhesive, while the sandwich insulation layer is degradable and could expand automatically upon being heated. The present doors could resist fire, and could degrade automatically under natural physical and chemical conditions in the air after being discard, and thus the environmentally friendly effect could be realized. Furthermore, the desired thickness of the environmentally friendly fireproof wooden door of the present invention could be dramatically reduced to 29mm.

### BRIEF DESCRIPTION OF THE DRAWINGS

The basic structure of the environmentally friendly fireproof wooden door according to the present invention will be described as an example with reference to the accompanying drawings, in which,
Fig. 1 is a schematic view of a front of the environmentally friendly fireproof wooden door according to the present invention; and
Fig. 2 is a partially enlarged cross-sectional view taken from a line II-II in Fig. 1, illustrating the basic assembly structure of the degradable fireproof wooden door plank of the present invention.

### DETAILED DESCRIPTION OF THE INVENTION

For purpose of clarity, the environmentally friendly fireproof wooden door and the degradable fireproof wooden door plank will be described in details as examples with reference to the accompanying drawings. It should be understood that the protective scope of the present invention should not be limited thereto.

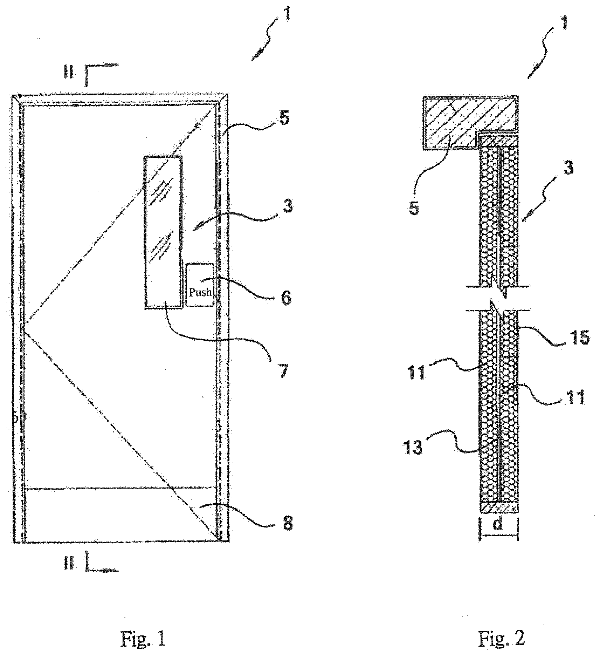

As shown in Fig. 1, the environmental fireproof wooden door 1 mainly comprises a degradable fireproof wooden door plank 3 and a wooden door frame 5 connected to the degradable fireproof wooden door plank 3. The wooden door 1 is normally provided with a finger plate 6, a wired glass 7, a stainless steel skirting board 8 and several normal components, such as a peephole, a door lock, hinges (not shown), etc.

As shown in Fig. 2, the degradable fireproof wooden door plank 3 comprises two degradable wooden layers 11 each with a thickness of 13mm, a mineral sandwich layer 13 with a thickness of 3mm between the degradable wooden layers 11, a door decorative panel 15 with a thickness of 2mm attached to an outer surface of each degradable wooden layer 11, in which mineral sandwich layer 13 is made of perlite and adhesive and is expendable upon being heated.

The degradable fireproof wooden layer 11 is made of natural fiber material by mixing with natural starch adhesive. The natural fiber material comprises discarded construction material, discarded wood, bamboo, cartons, etc. The mineral sandwich layer 13 could be consisted of perlite, oyster shell ash and adhesive. The adhesive could be a mixture of natural starch, such as a mixture of polyvinyl acetate, polyvinyl alcohol and soybean extract. The mineral sandwich layer could expand to form a thermal insulation layer upon being heated (when the temperature is 280 ºC or above).

The basic thickness d (without the decorative panels) of the degradable environmentally friendly fireproof wooden door plank 3 could be 29mm, to meet the requirement for 1-hour or 2-hour fire resistance period. The basic thickness d (without the decorative panels) of the degradable environmentally friendly fireproof wooden door plank could also be 60mm, to meet the requirement for 4-hour fire resistance period. However, to meet the requirement for 1-hour fire resistance period, the basic thickness of the conventional fireproof wooden door plank should be at least 48mm. Thus, the thickness of the fireproof wooden door plank 3 of the present invention could be decreased dramatically.

The procedure for manufacturing the degradable fireproof wooden door plank of the present invention will be described in details. Discarded construction material is the main source of the material for the degradable fireproof wooden door plank of the present invention, such as the discarded wood, bamboo, cartons, blocks or other natural fiber material. After the above-mentioned materials are collected and selected and then the metal, paint and litters thereon or therein are removed, they are grinded for a first time into blocks in the size of 25-30mm. Then, the blocks are grinded for a second time into particles in the size of 5mm or below, and litters in particles are blown away. Subsequently, the particles are grinded for a third time into powder. Adhesive consisted of degradable natural starch and organic animal glue is mixed into the powder according to the mixture ratio of 2:1 to 3:1, and then the mixture is stirred to form a paste status. Then, the pasty mixture is poured into a mold designed according to the size and thickness of desired fireproof wooden door plank. Subsequently, the pasty mixture within the mold is heated and solidified by virtue of microwave, to form a degradable wooden layer with a thickness of 13mm. A mineral sandwich layer with a thickness of 3mm is placed on the degradable wooden layer and the mineral sandwich layer is consisted of perlite and adhesive. The mineral sandwich layer is expandable when it is heated to a temperature of 280 ºC or above. Another degradable wooden layer is formed above the mineral sandwich layer according to the above-mentioned procedure, and thus the manufacture of a degradable fireproof wooden door plank with a thickness of 29mm is completed.

Although the description of the preferred embodiments of the present invention is made with reference to the accompanying drawings, the present invention is not limited to these embodiments. Various modifications and changes can be made to the invention by those skilled in the art without departing from the scopes of the present invention as claimed in the appended claims.

## Claims

1. A fireproof wooden door plank (3) comprising: two fireproof wooden layers (11) and a mineral sandwich layer (13), which sandwich layer (13) includes adhesive and is expandable upon being heated, **characterized in that** the door plank (3) is degradable and environment friendly, the two wooden layers (11) are degradable and made of natural fiber material that includes discarded construction material, discarded wood, bamboo or cartons by mixing with natural starch adhesive, and the mineral sandwich layer (13) with a thickness of 3 mm between the degradable wooden layers (11) is consisted of perlite, the adhesive of the mineral sandwich layer (13) is a mixture of polyvinyl acetate, polyvinyl alcohol and soybean extract and the mineral sandwich layer (13) is expandable upon being heated to a temperature of 280 °C or above.

2. The degradable environmentally friendly fireproof wooden door plank (3) according to claim 1, wherein the degradable environmentally friendly fireproof wooden door plank (3) has a thickness of 29mm, to meet the requirement for 1-hour or 2-hour fire resistance period.

3. The degradable environmentally friendly fireproof wooden door plank (3) according to claim 1, wherein the degradable environmentally friendly fireproof wooden door plank (3) has a thickness of 60mm, to meet the requirement for 4-hour fire resistance period.

4. The degradable environmentally friendly fireproof wooden door plank (3) according to claim 1 further comprising a fireproof decorative panel (15) with a thickness of 2mm attached to an outer surface of each degradable wooden layer.

5. An environmentally friendly fireproof wooden door (1) comprising:
a wooden door frame (5); and
a degradable environmentally friendly fireproof wooden door plank (3) according to any one of claims 1 to 4.

6. A method for manufacturing a fireproof wooden door plank **characterized by** the following steps:
(1) preparing natural fiber material by collecting and selecting discarded construction material, discarded wood, bamboo, cartons or other natural fiber material and removing metal, paint and litter therein, conducting a first grinding on the natural fiber material to form blocks in the size of 25-30mm, conducting a second grinding on the blocks to form particles in the size of 5mm or below and blowing away litters in particles, and conducting a third grinding on the particles to form powder;
(2) mixing adhesive consisted of natural starch and organic animal glue into the powder according to the mixture ratio of 2:1 to 3:1, stirring the mixture to become a paste status, pouring the pasty mixture into a mold designed according to the size and thickness of a desired fireproof wooden door plank, and heating and solidifying the pasty mixture within the mold by virtue of microwave to form a degradable wooden layer with a desired thickness;
(3) placing a mineral sandwich layer with a thickness of 3mm on the degradable wooden layer, in which the mineral sandwich layer is consisted of perlite and adhesive and is expandable upon being heated to a temperature of 280 °C or above; and
(4) forming another degradable wooden layer above the mineral sandwich layer by conducting the above steps (1) and (2), to form a finished product of the degradable fireproof wooden door plank with a desired thickness,
thereby obtaining a fireproof wooden door plank that is degradable and environmental friendly.

## Patentansprüche

1. Feuerfestes hölzernes Türblatt (3) umfassend:
zwei feuerfeste Holzlagen (11) und eine mineralische Sandwichschicht (13), wobei die Sandwichschicht (13) Klebstoff einschließt und sich bei Erwärmung ausdehnen kann, **dadurch gekennzeichnet, dass** das Türblatt (3) abbaubar und umweltfreundlich ist, die beiden Holzlagen (11) abbaubar und aus natürlichem Fasermaterial, das entsorgtes Baumaterial, entsorgtes Holz, Bambus oder Kartons einschließt, durch Mischen mit natürlichem Stärkekleber hergestellt sind, und wobei die mineralische Sandwichschicht (13) mit einer Dicke von 3mm zwischen den abbaubaren Holzlagen (11) aus Perlit besteht, der Klebstoff der mineralischen Sandwichschicht (13) eine Mischung aus Polyvinylacetat, Polyvinylalkohol und Sojabohnenextrakt ist und die mineralische Sandwichschicht (13) sich bei Erwärmung auf eine Temperatur von 280°C oder höher ausdehnen kann.

2. Abbaubares umweltfreundliches feuerfestes hölzernes Türblatt (3) nach Anspruch 1, wobei das abbaubare umweltfreundliche feuerfeste hölzerne Türblatt (3) eine Dicke von 29 mm aufweist, um die Anforderung an eine 1-Stunden- oder 2-Stunden-Feuerwiderstandsdauer einzuhalten.

3. Abbaubares umweltfreundliches feuerfestes hölzernes Türblatt (3) nach Anspruch 1, wobei das abbaubare umweltfreundliche feuerfeste hölzerne Türblatt (3) eine Dicke von 60mm aufweist, um die Anforderung an eine 4-Stunden-Feuerwiderstandsdauer einzuhalten.

4. Abbaubares umweltfreundliches feuerfestes hölzernes Türblatt (3) nach Anspruch 1, weiter umfassend eine feuerfeste Zierplatte (15) mit einer Dicke von 2mm, die an einer äußeren Oberfläche jeder abbaubaren Holzlage angebracht ist.

5. Umweltfreundliche feuerfeste hölzerne Tür (1), umfassend:
einen hölzernen Türrahmen (5); und ein abbaubares umweltfreundliches feuerfestes hölzernes Türblatt (3) nach einem der Ansprüche 1 bis 4.

6. Verfahren zum Herstellen eines feuerfesten hölzernen Türblatts, **gekennzeichnet durch** die folgenden Schritte:
(1) Vorbereiten von natürlichem Fasermaterial durch Sammeln und Auswählen von entsorgtem Baumaterial, entsorgtem Holz, Bambus, Kartons oder anderem natürlichem Fasermaterial und Entfernen von Metall, Farbe und Abfällen darin, Durchführen einer ersten Mahlung des natürlichen Fasermaterials, um Blöcke in der Größe von 25 bis 30 mm zu bilden, Durchführen einer zweiten Mahlung der Blöcke, um Partikel in der Größe von 5 mm oder weniger zu bilden und Wegblasen von Abfallpartikeln, und Durchführen einer dritten Mahlung der Partikel zum Bilden eines Pulvers;
(2) Mischen von Klebstoff, der aus natürlicher Stärke und organischem tierischem Kleber besteht, in das Pulver, gemäß einem Mischverhältnis von 2:1 bis 3:1, Rühren der Mischung in einen pastenförmigen Zustand, Gießen der pastenförmigen Mischung in eine Form, die gemäß der Größe und Dicke eines gewünschten feuerfesten hölzernen Türblatts gestaltet ist, und Erwärmen und Aushärten der pastenförmigen Mischung innerhalb der Form mittels Mikrowellen zum Bilden einer abbaubaren Holzschicht mit gewünschter Dicke;
(3) Aufbringen einer mineralischen Sandwichschicht mit einer Dicke von 3mm auf der abbaubaren Holzschicht, wobei die mineralische Sandwichschicht aus Perlit und Klebstoff besteht und nach Erwärmung auf eine Temperatur von 280°C oder mehr ausdehnbar ist; und
(4) Bilden einer weiteren abbaubaren Holzschicht über der mineralischen Sandwichschicht durch Ausführen der Schritte (1) und (2), um ein fertiges Produkt des abbaubaren feuerfesten hölzernen Türblatts mit einer gewünschten Dicke zu bilden,
so dass ein feuerfestes hölzernes Türblatt erhalten wird, das abbaubar und umweltfreundlich ist.

## Revendications

1. Une planche de porte en bois (3) ignifuge comprenant : deux couches de bois ignifuges (11) et une couche sandwich minérale (13), laquelle couche sandwich (13) comprend un adhésif et se dilate lorsqu'elle est chauffée, **caractérisée en ce que** la planche de porte (3) est dégradable et respectueuse de l'environnement, les deux couches de bois (11) étant dégradables et étant constituées de matériaux fibreux naturels qui comprennent des matériaux de construction mis au rebut, du bois mis au rebut, du bambou ou des cartons mélangés avec un adhésif d'amidon naturel et la couche sandwich minérale (13), ayant une épaisseur de 3 mm entre les couches de bois dégradables (11), étant constituée de perlite, l'adhésif de la couche sandwich minérale (13) étant un mélange d'acétate de polyvinyle, d'alcool polyvinylique et d'extrait de soja et la couche sandwich minérale (13) étant expansible lorsqu'elle est chauffée à une température de 280°C ou plus.

2. La planche de porte en bois (3) ignifuge, respectueuse de l'environnement et dégradable selon la revendication 1, dans laquelle la planche de porte en bois (3) ignifuge, respectueuse de l'environnement et dégradable a une épaisseur de 29 mm pour répondre à l'exigence de résistance au feu pendant une période de 1 heure ou de 2 heures.

3. La planche de porte en bois (3) ignifuge, respectueuse de l'environnement et dégradable selon la revendication 1, dans laquelle la planche de porte en bois (3) ignifuge respectueuse de l'environnement et dégradable a une épaisseur de 60 mm pour répondre à l'exigence de résistance au feu pendant une période de 4 heures.

4. La planche de porte en bois (3) ignifuge, respectueuse de l'environnement et dégradable selon la revendication 1, comprenant en outre un panneau décoratif (15) ignifuge d'une épaisseur de 2 mm, fixé à une surface extérieure de chaque couche de bois dégradable.

5. Une porte en bois (1) ignifuge et respectueuse de l'environnement, comprenant :
un cadre de porte en bois (5) ; et
une planche de porte en bois (3) ignifuge, respectueuse de l'environnement et dégradable selon l'une quelconque des revendications 1 à 4.

6. Un procédé de fabrication d'une planche de porte en bois ignifuge **caractérisé par** les étapes suivantes :
(1) le fait de préparer des matériaux fibreux naturels en collectant et en sélectionnant des matériaux de construction mis au rebut, du bois mis au rebut, du bambou, des cartons ou d'autres matériaux en fibres naturelles et le fait d'éliminer le métal, la peinture et les déchets dans ceux-ci, le fait d'effectuer un premier broyage sur le matériau fibreux naturel pour former des blocs d'une taille de 25 à 30 mm, le fait de conduire un deuxième broyage sur les blocs pour former des particules de 5 mm ou moins et de retirer les déchets dans des particules par soufflage, et le fait d'effectuer un troisième broyage sur les particules pour former de la poudre ;
(2) le fait de mélanger de l'adhésif constitué d'un mélange d'amidon naturel et d'une glue organique d'origine animale dans la poudre selon le rapport de mélange de 2:1 à 3:1, le fait d'agiter le mélange pour l'amener à un état de pâte, le fait de verser le mélange pâteux dans un moule conçu selon la taille et l'épaisseur d'une planche de porte à bois ignifuge souhaitée, et le fait de chauffer et laisser solidifier le mélange pâteux dans le moule au moyen de micro-ondes pour former une couche de bois dégradable ayant une épaisseur souhaitée ;
(3) le fait de placer une couche sandwich minérale d'une épaisseur de 3 mm sur la couche de bois dégradable, dans laquelle la couche sandwich minérale est constituée de perlite et d'adhésif et est expansible lorsqu'elle est chauffée à une température de 280° C ou supérieure ; et
(4) le fait de former une autre couche de bois dégradable au-dessus de la couche sandwich minérale en mettant en oeuvre les étapes (1) et (2) ci-dessus, pour former un produit fini de la planche de porte en bois ignifuge dégradable ayant une épaisseur souhaitée,
obtenant ainsi une planche de porte en bois ignifuge qui est dégradable et respectueuse de l'environnement.
